(19) Europäisches Patentamt
European Patent Office
Office européen des brevets

(11) **EP 2 699 820 B1**

(12) **EUROPÄISCHE PATENTSCHRIFT**

(45) Veröffentlichungstag und Bekanntmachung des Hinweises auf die Patenterteilung:
**10.08.2016 Patentblatt 2016/32**

(51) Int Cl.:
*F16G 1/10* *(2006.01)*       *F16G 1/28* *(2006.01)*
*F16G 5/08* *(2006.01)*       *F16G 5/20* *(2006.01)*

(21) Anmeldenummer: **12715025.8**

(22) Anmeldetag: **04.04.2012**

(86) Internationale Anmeldenummer:
**PCT/EP2012/056134**

(87) Internationale Veröffentlichungsnummer:
**WO 2012/143241 (26.10.2012 Gazette 2012/43)**

(54) **ANTRIEBSRIEMEN, INSBESONDERE KEILRIPPENRIEMEN, MIT VERBESSERTER REISSFESTIGKEIT**

DRIVE BELT, IN PARTICULAR A V-RIBBED BELT, HAVING IMPROVED TENSILE STRENGTH

COURROIE D'ENTRAÎNEMENT, EN PARTICULIER COURROIE TRAPÉZOÏDALE CRANTÉE, PRÉSENTANT UNE RÉSISTANCE À LA DÉCHIRURE AMÉLIORÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.04.2011 DE 102011002230**

(43) Veröffentlichungstag der Anmeldung:
**26.02.2014 Patentblatt 2014/09**

(73) Patentinhaber: **ContiTech Antriebssysteme GmbH**
**30165 Hannover (DE)**

(72) Erfinder:
• **OBERT, Markus**
**30457 Hannover (DE)**
• **KANZOW, Henning**
**30419 Hannover (DE)**
• **FINZELBERG, Jan**
**30159 Hannover (DE)**

(74) Vertreter: **Preusser, Andrea**
**Continental Aktiengesellschaft**
**Intellectual Property**
**Postfach 169**
**30001 Hannover (DE)**

(56) Entgegenhaltungen:
**WO-A1-2009/139160**    **DE-A1- 4 215 142**
**DE-A1- 10 204 092**    **JP-A- 2003 130 137**
**US-A- 5 802 839**

**Beschreibung**

Die Erfindung betrifft einen Antriebsriemen mit einem Grundkörper aus einem polymeren Werkstoff mit elastischen Eigenschaften, umfassend eine Decklage als Riemenrücken sowie einen Unterbau mit einer Kraftübertragungszone, wobei

- nach einer ersten Variante in dem Grundkörper wenigstens ein Zugstrang aus Aramid in Kordkonstruktion eingebettet ist oder

- nach einer zweiten Variante zwischen der Decklage und dem Unterbau eine Zwischenlage aus einem polymeren Werkstoff mit elastischen Eigenschaften angeordnet ist, wobei in der Zwischenlage wenigstens ein Zugstrang aus Aramid in Kordkonstruktion eingebettet ist; oder

- nach einer dritten Variante wenigstens ein Zugstrang aus Aramid in Kordkonstruktiön eine Kordlage bildet, wobei zwischen der Kordlage und der Decklage und/oder zwischen der Kordlage und dem Unterbau eine Zwischenlage aus einem polymeren Werkstoff mit elastischen Eigenschaften angeordnet ist.

Die Kordkonstruktion eines Zugstranges basiert dabei auf einer Anzahl von Filamenten, die ein Garn bilden. Eine Gruppe von einem oder mehreren Garnen nennt man Litze, wobei wiederum eine Gruppe von Litzen den Kord bilden.

Antriebsriemen, die auch als Kraftübertragungsriemen bezeichnet werden und im Funktionszustand endlos geschlossen sind, können als Flachriemen, Keilriemen, Keilrippenriemen, Zahnriemen und Kupplungsriemen ausgebildet sein. Von besonderer Bedeutung sind hierbei der Zahnriemen und der Keilrippenriemen, letzterer findet vor allem Verwendung in Fahrzeugen zum Antrieb mehrerer Nebenaggregate, wie beispielsweise Kühlwasserpumpe, Klimakompressor, Lichtmaschine oder Servopumpe. Des Weiteren finden sich Keilrippenriemen (KRR) auch in üblichen Haushaltsgeräten, wie zum Beispiel Waschmaschinen.

Die Elastizität unter Einbezug der Biegeelastizität eines Antriebsriemens wird dadurch erreicht, dass der Grundkörper und somit die Decklage und der Unterbau aus einem polymeren Werkstoff mit elastischen Eigenschaften bestehen, wobei hier insbesondere die beiden Werkstoffgruppen Elastomere und thermoplastische Elastomere zu nennen sind. Von besonderer Bedeutung sind Elastomere auf der Basis einer vulkanisierten Kautschukmischung.

Der Antriebsriemen ist mit wenigstens einem eingebetteten Zugstrang nach einer der drei eingangs genannten Varianten versehen, wobei insbesondere mehrere Zugstränge eine Festigkeitsträgerlage bzw. Zugträgerlage bilden. Die Zugstränge sind unter anderem für die Festigkeit des Antriebsriemens unter Spannung verantwortlich.

In WO 2011/000637A1 werden verschiedene Werkstoffe für Zugstränge beschrieben. So ist aus WO 2011/000637A1 bekannt, dass Aramid als Werkstoff für den Zugstrang aufgrund des hochmodulen Charakters und der geringen Dehnbarkeit insbesondere für elastische KRR ungeeignet sind.

Des Weiteren ist bekannt, dass Aramidfilamente empfindlich gegen Stauchung sind und daher Antriebsriemen, insbesondere KRR, mit Aramidzugstrang einen Abbau der Reißfestigkeit des Riemens bei dynamischer Biegung und Gegenbiegung beispielsweise über die Scheiben eines Riemenantriebs zeigen.

Zur Optimierung der Eigenschaften von Antriebsriemen mit Aramid sind bereits verschiedene Aramidkordkonstruktionen bekannt.

Beispielsweise wird in EP0799917B1 hierzu eine spezielle Aramidkordkonstruktion beschrieben, die fünf Litzen umfasst, wobei jede Litze drei Garne umfasst, und die definierte Zwirnkoeffizienten in Abhängigkeit von den Drehungen der Litzen bzw. Garne besitzt. Eine spezielle Aramidkordkonstruktion mit drei Litzen und einem Zwirn von umgerechnet 193 t/m und mit einem Verhältnis des Zwirnfaktors der Garne zum Zwirnfaktor der Litzen von ca. 0,34 ist aus US 5,425,681B1 bekannt.

In der JP 2003130137 ist ein Antriebsriemen gemäß dem Oberbegriff vom Anspruch 1 offenbart.

Aufgabe der vorliegenden Erfindung ist daher eine weitere alternative Aramidkordkonstruktion für einen Antriebsriemen bereitszustellen, wodurch der Antriebsriemen gleichzeitig eine verbesserte Reißfestigkeit erlangt.

Gelöst wird diese Aufgabe dadurch, dass der Zugstrang aus Aramid zwei oder drei Litzen aufweist mit einem Verhältnis des Zwirnfaktors der Garne zum Zwirnfaktor der Litzen zwischen 0,7 und 2,5.

Überraschenderweise wurde gefunden, dass ein derartig konstruierter Antriebsriemen, insbesondere ein Keilrippenriemen oder ein Zahnriemen, mit Aramid als Zugstrang einen deutlich reduzierten Abbau der Reißfestigkeit unter Spannung aufweist.

Gemäß DIN 60001 wird ein Filament als Faser von mindestens 1000 mm Länge definiert. Unter einer Litze wird im allgemeinen Sprachgebrauch und in der Textilindustrie ein zweidimensionales Geflecht verstanden. Die einzelnen Fäden werden miteinander verschlungen.

Gemäß DIN 60 900 (insbesondere Teil 1) gilt:

     Zwirn: Alle linienförmigen textilen Gebilde, die durch Zusammendrehen (Zwirnen) von mindestens zwei Garnen hergestellt sind.

     Garn: Linienförmiges Gebilde, das aus textilen Faserstoffen (Spinnfasern, Filamente oder Bändchen) hergestellt ist.

     Vorzwirn: Zwirn aus ungezwirnten Garnen (1. Stufe) sowie gegebenenfalls aus bereits gezwirnten Garnen (2. Stufe) als Vorstufe für den Auszwirn. Auszwirn: Endgültiger, mehrstufiger Zwirn aus Vorzwirnen, gegebenenfalls auch unter Mitverwendung von einfachen Garnen.

Weiterhin wird in dieser Schrift unter Zwirnfaktor (= Twist-Faktor) folgendes verstanden: Twist-Faktor

$$TF = (TPM/100) * \sqrt{T}$$, wobei T für die Garnfeinheit (Titer) in tex und TPM für den Drall steht, ausgedrückt in Windungen pro Meter. Der TF des Vorzwirns wird aus dem Titer des Garnes und der Garndrehung, der TF des Auszwirns aus dem Gesamttiter der Litzen und der Litzendrehung berechnet.

Die Kurzbezeichnung "tpm" bzw. "t/m" bedeutet "turns per meter" und ist eine typische Einheit in der Textiltechnologie bei Drehungen (engl. Twist) aller Art. Die alternative Einheit ist auch "m$^{-1}$". Das Messgerät für die Drehung ist ein Drehungszähler Zweigle D314, und zwar bei einer Messvorschrift nach DIN ISO 2061. Dabei werden die Proben auf der Spule 24 Stunden im Normklima nach EN ISO 139 (20 °C, relative Luftfeuchte von 65 %) gelagert und anschließend ohne Trocknung gemessen.

Als Aramid können alle der fachkundigen Person bekannten Aramide, auch als Polyaramide bezeichnet (Kurzzeichen AR), verwendet werden. Hier sind insbesondere Poly(terephthalsäure-p-phenylendiamid), auch als Poly(p-phenylenterephthalamid, PPTA oder p-Aramid bezeichnet, und Poly(isophthalsäure-m-phenylendiamid), auch als Poly(m-phenylenisophthalamid, PMIA oder m-Aramid bezeichnet, zu nennen. Als besonders geeignet für Antriebsriemen hat sich die Verwendung von p-Aramid gezeigt.

Gemäß Anspruch 1 hat der Antriebsriemen einen Grundkörper aus einem polymeren Werkstoff mit elastischen Eigenschaften, umfassend eine Decklage als Riemenrücken sowie einen Unterbau mit einer Kraftübertragungszone, wobei der Antriebsriemen in drei unterschiedlichen Varianten ausgebildet sein kann. Nach einer ersten Variante ist in dem Grundkörper wenigstens ein Zugstrang aus Aramid in Kordkonstruktion eingebettet, während nach einer zweiten Variante zwischen der Decklage und dem Unterbau eine Zwischenlage aus einem polymeren Werkstoff mit elastischen Eigenschaften angeordnet ist, wobei in der Zwischenlage wenigstens ein Zugstrang aus Aramid in Kordkonstruktion eingebettet ist. Nach einer dritten Variante schließlich, bildet wenigstens ein Zugstrang aus Aramid in Kordkonstruktion eine Kordlage, wobei zwischen der Kordlage und der Decklage und/oder zwischen der Kordlage und dem Unterbau eine Zwischenlage aus einem polymeren Werkstoff mit elastischen Eigenschaften angeordnet ist.

Allein drei Varianten ist gemein, dass der Zugstrang aus Aramid erfindungsgemäß zwei oder drei Litzen mit einem Verhältnis des Zwirnfaktors der Garne zum Zwirnfaktor der Litzen zwischen 0,7 und 2,5, bevorzugt zwischen 0,9 und 1,5, aufweisen muss.

In einer bevorzugten Ausführungsform hat der Vorzwirn des Zugstrangs aus Aramid einen Wert zwischen 250 und 500 t/m, bevorzugt zwischen 300 und 400 t/m.

In einer weiteren bevorzugten Ausführungsform hat der Zugstrang aus Aramid einen Auszwirn zwischen 150 und 300 t/m, bevorzugt zwischen 170 und 240 t/m.

Vorzugsweise hat der Zugstrang aus Aramid mit zwei oder drei Litzen ein Verhältnis von Gesamtdrehzahl des Vorzwirns der Litzen zur Drehzahl der Litzen im Auszwirn zwischen 4,5 und 6,5.

Eine besonders gute Reißbeständigkeit besitzt ein Antriebsriemen, dessen Zugstrang aus Aramid drei Litzen aufweist und dessen Titer zusätzlich zu dem obigen Verhältnis zwischen 3000 und 3600 dtex beträgt oder dessen Zugstrang aus Aramid zwei Litzen aufweist und dessen Titer zusätzlich zu dem obigen Verhältnis zwischen 2000 und 2400 dtex beträgt.

Wie bereits oben beschrieben, zeigt der erfindungsgemäße Antriebsriemen eine besonders gute Reißfestigkeit. So zeigt beispielsweise ein Keilrippenriemen, der einen Kord aus p-Aramid, 1100x1x3, 360/200 SZ besitzt auf einem dynamischen 5-Scheiben-Prüfstand (5000 1/m Frequenz, 500N konstante Riemenbelastung) lediglich einen Verlust der Reißfestigkeit von 22,5kN auf 20kN. Zum Vergleich zeigt ein Kord aus dem Stand der Technik mit p-Aramid, 1100x1x4, 360/200 SZ einen Verlust der Reißfestigkeit bei gleicher Belastung von 26kN auf kleiner oder gleich 18kN.

Besonders bevorzugt ist es, wenn der Antriebsriemen nach dem bekannten Formverfahren, bei dem der Riemenrohling eines sogenannten Konfektionswickels in einer innen profilierten Form vulkanisiert wird, hergestellt wurde. Hierbei ergibt sich eine zusätzliche Stabilisierung des Aramid-Zugträgers.

Weitere vorteilhafte Gestaltungsvarianten des erfindungsgemäßen Antriebsriemens werden im Rahmen der Figurenbeschreibung noch näher vorgestellt.

Die Erfindung wird nun anhand von Ausführungsbeispielen unter Bezugnahme auf schematische Zeichnungen erläutert. Es zeigen:

Fig. 1    einen Querschnitt eines Keilrippenriemens

Fig. 2    eine Litze, gebildet aus Filamenten

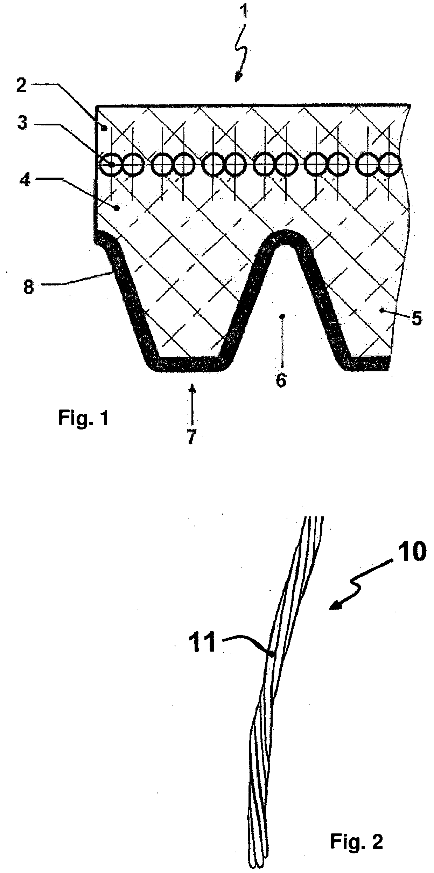

Fig. 1 zeigt einen Antriebsriemen 1 in Form eines Keilrippenriemens mit einer Decklage 2 als Riemenrücken, einer einlagigen Festigkeitsträgerlage 3 mit in Längsrichtung verlaufenden parallel angeordneten Zugsträngen aus Aramid 4 sowie mit einem Unterbau 4. Der Unterbau weist eine Keilrippenstruktur auf, gebildet aus Rippen 5 und Rillen 6. Der Unterbau 4 mfasst dabei die Kraftübertragungszone 7.

Die Decklage 2 und der Unterbau 4 bilden dabei als Gesamteinheit den Grundkörper aus einem polymeren Werkstoff mit elastischen Eigenschaften, insbesondere in Form einer vulkanisierten Kautschukmischung, enthaltend wenigstens eine Kautschukkompönente und Mischungsingredienzien. Als Kautschukkomponente wird insbesondere ein Ethylen-Propylen-Kautschuk (EPM), ein Ethylen-Propylen-Dien-Kautschuk (EPDM), (teil)hydrierter Nitrilkautschuk (HNBR), Chloropren-Kautschuk (CR), chlorsulfoniertes Polyethylen (CSM), Fluor-Kautschuk (FKM), Naturkautschuk (NR), Styrol-Butadien-Kautschuk (SBR) oder Butadien-Kautschuk (BR) eingesetzt, die unverschnitten oder mit wenigstens einer weiteren Kautschukkomponente, insbesondere mit einem der vorgenannten Kautschuktypen, verschnitten sind, beispielsweise in Form eines EPM/EPDM- oder SBRBR-Verschnittes. Von besonderer Bedeutung ist dabei EPM oder EPDM, jeweils separat oder als Verschnitt, (H-) NBR oder CSM. Ebenso können bevorzugt Polyurethane separat oder im Verschnitt mit den vorgenannten Kautschuktypen verwendet werden.

Die Mischungsingredienzien umfassen dabei wenigstens einen Vernetzer oder ein Vernetzersystem (Vernetzungsmittel und Beschleuniger). Weitere Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoffe, beispielsweise Fasern und Farbpigmente. Diesbezüglich wird auf den allgemeinen Stand der Kautschukmischungstechnologie verwiesen.

In einer bevorzugten Ausführungsform enthält die Decklage 2 Fasern aus Aramid, Polyester, Polyamid, Poly-p-phenylenbenzobisoxazol (PBO), Naturfasern, wie bspw. Baumwolle, Leinen, Rayon, Glasfasern, Metallfasern, Silikatfasern oder weiteren, in der Kautschukindustrie üblichen, Fasermaterialien.

Enthält die Decklage 2 Fasern, so bilden diese in einer bevorzugten Ausführungsform einen Winkel zu den Zugsträngen 3 aus Aramid von 70 bis 120°, bevorzugt von 80 bis 100°. Hierbei zeigen sich besonders gute Ergebnisse hinsichtlich der Reißfestigkeit. Die Ausrichtung der Fasern erfolgt hierbei statistisch über den Extrusionsprozess und das anschließende Kalandrieren der faserhaltigen Decklage 2.

Es ist aber auch möglich, dass die Decklage frei von Fasern ist.

Die Zugstränge 3 aus Aramid sind hier ohne Zwischenlage im Grundkörper eingebettet. Jeder Zugstrang 3 aus Aramid kann zusätzlich mit einer Haftschicht ausgerüstet sein, die beispielsweise ein Silan oder ein Resorcin-Formaldehyd-Latex (RFL) ist. Hinsichtlich derartiger oder ähnlicher Haftkonzepte wird beispielhaft auf die Offenlegungsschrift DE 10 2007 044 436 A1 verwiesen.

Der Antriebsriemen 1 kann innerhalb seiner Kraftübertragungszone 7 mit einer Beschichtung 8 versehen sein, und zwar in Form einer Beflockung, beispielsweise mit einem Baumwoll- oder Aramidflock nach DE 38 23 157 A1 und DE 100 16 351 A1, oder in Form einer Textilauflage nach DE 10 2006 007 509 A1. Von besonderer Bedeutung sind Textilauflagen, insbesondere wiederum in Form eines Gewebes, Gewirkes oder Gestricks. Bei einem Keilrippenriemen ist die Textilauflage vorzugsweise ein Gewirke oder Gestrick.

Mit einer derartigen Beschichtung wird eine Kombination aus Verschleißschutz und Geräuschdämmung erzielt.

Die Beschichtung kann zwecks Erfüllung des zusätzlichen Kriterium der Medienbeständigkeit, insbesondere unter dem Aspekt der Ölbeständigkeit, bei gleichzeitig guter Gleitfähigkeit ein Fluorkunststoff sein, der insbesondere Polytetrafluorethylen (PTFE) und/oder Polyvinylfluorid (PVF) und/oder Polyvinylidenfluorid (PVDF) ist. Von besonderer Beutung ist PTFE. Der Fluorkunststoff kann nach einer neueren Entwicklung aus einer Folie, insbesondere einer PTFE-Folie, oder aus einem Folienverbund, insbesondere einer PTFE/PA-Folie bestehen, wobei bei einem Folienverbund das PTFE die unmittelbare Oberschicht bildet (DE 10 2008 012 044.8). Eine bevorzugte Alternative hierzu besteht darin, eine Textilauflage mit einem Fluorkunststoff zu tränken bzw. zu versiegeln. Die zusätzliche Maßnahme der Beschichtung, die auch für die Decklage 2 angewandt werden kann, führt zu einer Erhöhung der Lebensdauer des Antriebsriemens.

Fig. 2 zeigt eine Litze 10, gebildet aus mindestens einem Garn 11, das wiederum aus einer Vielzahl von Filamenten besteht. Die Litze 10 liegt dabei zumeist als Litzenhelix vor, was in der Fig. 2 verdeutlicht wird. Eine Gruppe von Litzen bildet schließlich den Kord.

Die Garne 11 bestehen aus Aramid. Dies bedeutet, dass somit auch die Litzen 10 und schließlich der Kord als wirksamer Zugstrang 3 (Fig. 1) aus Aramid bestehen.

Die Garne 11, die Litzen 10 oder der Kord können präpariert sein. Häufig wird der Kord haftfreundlich präpariert, beispielsweise mit RFL.

Besonders zweckmäßig ist es, wenn bereits die Garne 11 präpariert werden, so dass sich präparierte Litzen 10 und letztlich auch ein präparierter Kord bilden. Die Präparation der Filamente erfolgt dabei insbesondere mit einem polymeren Werkstoff unter Ausbildung einer Filamentummantelung. Die Polymerbasis richtet sich dabei vorzugsweise nach dem Grundkörperwerkstoff des Antriebsriemens. Besteht beispielsweise der Grundkörper auf einer Kautschukmischung auf der Basis von HNBR, so bildet auch HNBR die Polymerbasis der Ummantelung, insbesondere unter Einsatz einer Gummilösung. Neben der Zugkrafteigenschaft des Kordes auf der Basis von Aramid werden hier zusätzlich Elastizität und Haftfreundlichkeit in die Kordkonstruktion eingebracht.

**Bezugszeichenliste** (Teil der Beschreibung)

1    Antriebsriemen (hier: Keilrippenriemen)
2    Decklage (Riemenrücken)
3    Zugträger in Form von EinzelKorden
4    Unterbau

5 Rippen
6 Rillen
7 Kraftübertragungszone
8 Beschichtung
10 Litze
11 Garn

**Patentansprüche**

1. Antriebsriemen (1) mit einem Grundkörper aus einem polymeren Werkstoff mit elastischen Eigenschaften, umfassend eine Decklage (2) als Riemenrücken sowie einen Unterbau (4) mit einer Kraftübertragungszone (7), wobei

   - nach einer ersten Variante in dem Grundkörper wenigstens ein Zugstrang aus Aramid (3) in Kordkonstruktion eingebettet ist oder
   - nach einer zweiten Variante zwischen der Decklage (2) und dem Unterbau (4) eine Zwischenlage aus einem polymeren Werkstoff mit elastischen Eigenschaften angeordnet ist, wobei in der Zwischenlage wenigstens ein Zugstrang aus Aramid (3) in Kordkonstruktion eingebettet ist, oder
   - nach einer dritten Variante wenigstens ein Zugstrang aus Aramid (3) in Kordkonstruktion eine Kordlage bildet, wobei zwischen der Kordlage und der Decklage (2) und/oder zwischen der Kordlage und dem Unterbau (4) eine Zwischenlage aus einem polymeren Werkstoff mit elastischen Eigenschaften angeordnet ist,

   **dadurch gekennzeichnet, dass** der Zugstrang aus Aramid (3) zwei oder drei Litzen (10) aufweist mit einem Verhältnis des Zwirnfaktors der Garne zum Zwirnfaktor der Litzen zwischen 0,7 und 2,5, wobei der Vorzwirn des Zugstrangs aus Aramid (3) mit zwei oder drei Litzen (10) eine Drehung zwischen 250 und 500 t/m hat und wobei der Auszwirn des Zugstrangs aus Aramid (3) mit zwei oder drei Litzen (10) eine Drehung zwischen 150 und 300 t/m hat, und dass die Kautschukmischung der Decklage (2) Fasern enthält, wobei die Fasern der faserhaltigen Decklage (2) und die Zugstränge aus Aramid (3) einen Winkel zwischen 70 und 120° bilden.

2. Antriebsriemen (1) nach Anspruch 1, **dadurch gekennzeichnet, dass** der Zugstrang aus Aramid (3) zwei oder drei Litzen (10) aufweist mit einem Verhältnis des Zwirnfaktors der Garne zum Zwirnfaktor der Litzen zwischen 0,9 und 1,5.

3. Antriebsriemen (1) nach Anspruch 1, **dadurch gekennzeichnet, dass** der Vorzwirn des Zugstrangs aus Aramid (3) mit zwei oder drei Litzen (10) eine Drehung zwischen 300 und 400 t/m hat.

4. Antriebsriemen (1) nach Anspruch 1, **dadurch gekennzeichnet, dass** der Auszwirn des Zugstrangs aus Aramid (3) mit zwei oder drei Litzen (10) eine Drehung zwischen 170 und 240 t/m hat.

5. Antriebsriemen (1) nach einem der Ansprüche 1 bis 4, **dadurch gekennzeichnet, dass** der Zugstrang aus Aramid (3) zwei oder drei Litzen (10) aufweist mit einem Verhältnis von Gesamtdrehzahl des Vorzwirns der Litzen zur Drehzahl der Litzen im Auszwirn zwischen 4,5 und 6,5.

6. Antriebsriemen (1) nach einem der Ansprüche 1 bis 5, **dadurch gekennzeichnet, dass** der polymere Werkstoff des Grundköpers (2, 4, 7) ausgewählt ist aus der Gruppe, bestehend aus Ethylen-Propylen-Dien-Copolymer (EPDM) und / oder Nitrilkautschuk (NBR) und / oder hydrierter Nitrilkautschuk (HNBR) und / oder chlorsulfoniertes Polyethylen (CSM) und / oder Polyurethan (PU).

7. Antriebsriemen (1) nach Anspruch 1, **dadurch gekennzeichnet, dass** die Fasern der faserhaltigen Decklage (2) und die Zugstränge aus Aramid (3) einen Winkel zwischen 80 und 100° bilden.

8. Antriebsriemen (1) nach einem der Ansprüche 1 bis 7, **dadurch gekennzeichnet, dass** der Zugstrang aus Aramid (3) drei Litzen aufweist und der Titer zwischen 3000 und 3600 dtex beträgt.

9. Antriebsriemen (1) nach einem der Ansprüche 1 bis 8, **dadurch gekennzeichnet, dass** der Zugstrang aus Aramid (3) zwei Litzen aufweist und der Titer zwischen 2000 und 2400 dtex beträgt.

10. Antriebsriemen (1) nach einem der Ansprüche 1 bis 9, **dadurch gekennzeichnet, dass** der Zugstrang aus p-Aramid (3) gebildet wird.

**Claims**

1. Drive belt (1) with a belt body made of a polymeric material with resilient properties, comprising an outer layer (2) as belt backing and an underside (4) with a force-transmission zone (7), where

   - according to a first variant there is, embedded in the belt body, at least one tension member made of aramid (3) in a cord structure or
   - according to a second variant the arrangement has, between the outer layer (2) and the underside (4), an intermediate layer made of a polymeric material with resilient properties, there being at least one tension member made of aramid (3) in a cord structure embedded in the intermediate layer, or

- according to a third variant, at least one tension member made of aramid (3) in a cord structure forms a cord layer and the arrangement here has, between the cord layer and the outer layer (2) and/or between the cord layer and the underside (4), an intermediate layer made of a polymeric material with resilient properties,

**characterized in that** the tension member made of aramid (3) has two or three strands (10) where the ratio of the twist factor of the yarns to the twist factor of the strands is 0.7 to 2.5, where the twist of the precursor thread of the tension member made of aramid (3) with two or three strands (10) is from 250 to 500 t/m and where the twist of the final thread of the tension member made of aramid (3) with two or three strands (10) is from 150 to 300 t/m, and that the rubber mixture of the outer layer (2) comprises fibres, where the angle between the fibres of the fibre-containing outer layer (2) and the tension members made of aramid (3) is from 70 to 120°.

2. Drive belt (1) according to Claim 1, **characterized in that** the tension member made of aramid (3) comprises two or three strands (10) where the ratio of the twist factor of the yarns to the twist factor of the strands is from 0.9 to 1.5.

3. Drive belt (1) according to Claim 1, **characterized in that** the twist of the precursor thread of the tension member made of aramid (3) with two or three strands (10) is from 300 to 400 t/m.

4. Drive belt (1) according to Claim 1, **characterized in that** the twist of the fibre thread of the tension member made of aramid (3) with two or three strands (10) is from 170 to 240 t/m.

5. Drive belt (1) according to any of Claims 1 to 4, **characterized in that** the tension member made of aramid (3) comprises two or three strands (10) where the ratio of overall twist number of the thread precursor of the strands to the twist number of the strands in the final thread is from 4.5 to 6.5.

6. Drive belt (1) according to any of Claims 1 to 5, **characterized in that** the polymeric material of the belt body (2, 4, 7) is selected from the group consisting of ethylene-propylene-diene copolymer (EPDM) and/or nitrile rubber (NBR) and/or hydrogenated nitrile rubber (HNBR) and/or chlorosulphonated polyethylene (CSM) and/or polyurethane (PU).

7. Drive belt (1) according to Claim 1, **characterized in that** the angle between the fibres of the fibre-containing outer layer (2) and the tension members made of aramid (3) is from 80 to 100°.

8. Drive belt (1) according to any of Claims 1 to 7, **characterized in that** the tension member made of aramid (3) comprises three strands and the linear density is from 3000 to 3600 dtex.

9. Drive belt (1) according to any of Claims 1 to 8, **characterized in that** the tension member made of aramid (3) comprises two strands and the linear density is from 2000 to 2400 dtex.

10. Drive belt (1) according to any of Claims 1 to 9, **characterized in that** the tension member is formed from p-aramid (3).

**Revendications**

1. Courroie d'entraînement (1) présentant un corps de base en un matériau polymère doté de propriétés élastiques, comprenant une couche de couverture (2) comme dos de courroie ainsi qu'une sous-structure (4) présentant une zone (7) de transmission de force,

- selon une première variante, au moins un brin de traction en aramide (3) étant incorporé dans la construction de câblé dans le corps de base ou
- selon une deuxième variante, une couche intermédiaire en un matériau polymère doté de propriétés élastiques étant disposée entre la couche de couverture (2) et la sous-structure (4), au moins un brin de traction en aramide (3) étant incorporé dans la construction de câblé dans la couche intermédiaire ou
- selon une troisième variante, au moins un brin de traction en aramide (3) formant une nappe de tissu câblé dans la construction de câblé, une couche intermédiaire en un matériau polymère doté de propriétés élastiques étant disposée entre la nappe de tissu câblé et la couche de couverture (2) et/ou entre la nappe de tissu câblé et la sous-structure (4),

**caractérisée en ce que** le brin de traction en aramide (3) est pourvu de deux ou trois torons (10) présentant un rapport du facteur de torsion des fils au facteur de torsion des torons entre 0,7 et 2,5, le fil retors primaire du brin de traction en aramide (3) pourvu de deux ou trois torons (10) présentant une torsion entre 250 et 500 t/m et le fil retors final du brin de traction en aramide (3) pourvu de deux ou trois torons (10) présentant une torsion entre 150 et 300 t/m et **en ce que** le mélange de caoutchouc de la couche de couverture (2) contient des fibres, les fibres de la couche de couverture (2) contenant des fibres et les brins de traction en aramide (3) formant un angle entre 70 et 120 degrés.

**2.** Courroie d'entraînement (1) selon la revendication 1, **caractérisée en ce que** le brin de traction en aramide (3) est pourvu de deux ou trois torons (10) présentant un rapport du facteur de torsion des fils au facteur de torsion des torons entre 0,9 et 1,5.

**3.** Courroie d'entraînement (1) selon la revendication 1, **caractérisée en ce que** le fil retors primaire du brin de traction en aramide (3) pourvu de deux ou trois torons (10) présente une torsion entre 300 et 400 t/m.

**4.** Courroie d'entraînement (1) selon la revendication 1, **caractérisée en ce que** le fil retors final du brin de traction en aramide (3) pourvu de deux ou trois torons (10) présente une torsion entre 170 et 240 t/m.

**5.** Courroie d'entraînement (1) selon l'une quelconque des revendications 1 à 4, **caractérisée en ce que** le brin de traction en aramide (3) est pourvu de deux ou trois torons (10), présentant un rapport du nombre total de tours du fil retors primaire des torons au nombre de tours des torons dans le fil retors final entre 4,5 et 6,5.

**6.** Courroie d'entraînement (1) selon l'une quelconque des revendications 1 à 5, **caractérisée en ce que** le matériau polymère du corps de base (2, 4, 7) est choisi dans le groupe constitué par un copolymère d'éthylène-propylène-diène (EPDM) et/ou le caoutchouc de nitrile (NBR) et/ou le caoutchouc de nitrile hydrogéné (HNBR) et/ou le polyéthylène chlorosulfoné (CSM) et/ou le polyuréthane (PU).

**7.** Courroie d'entraînement (1) selon la revendication 1, **caractérisée en ce que** les fibres de la couche de couverture (2) contenant des fibres et les brins de traction en aramide (3) forment un angle entre 80 et 100 degrés.

**8.** Courroie d'entraînement (1) selon l'une quelconque des revendications 1 à 7, **caractérisée en ce que** le brin de traction en aramide (3) présente trois torons et le titre est compris entre 3000 et 3600 dtex.

**9.** Courroie d'entraînement (1) selon l'une quelconque des revendications 1 à 8, **caractérisée en ce que** le brin de traction en aramide (3) présente deux torons et le titre est compris entre 2000 et 2400 dtex.

**10.** Courroie d'entraînement (1) selon l'une quelconque des revendications 1 à 9, **caractérisée en ce que** le brin de traction est formé en p-aramide (3).

**Fig. 1**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011000637 A1
- EP 0799917 B1
- US 5425681 B1
- JP 2003130137 B
- DE 102007044436 A1
- DE 3823157 A1
- DE 10016351 A1
- DE 102006007509 A1
- DE 102008012044